**Europäisches Patentamt**

**European Patent Office**

**Office européen des brevets**

(19)

(11) Veröffentlichungsnummer : **0 070 062**
**B1**

(12) **EUROPÄISCHE PATENTSCHRIFT**

(45) Veröffentlichungstag der Patentschrift :
**16.04.86**

(21) Anmeldenummer : **82200809.0**

(22) Anmeldetag : **30.06.82**

(51) Int. Cl.⁴ : **G 11 B 15/66// F16H35/14**

(54) **Vorrichtung zum selbsttätigen Einziehen und Auswerfen eines Informationsträgers.**

(30) Priorität : **04.07.81 DE 3126497**

(43) Veröffentlichungstag der Anmeldung :
**19.01.83 Patentblatt 83/03**

(45) Bekanntmachung des Hinweises auf die Patenterteilung : **16.04.86 Patentblatt 86/16**

(84) Benannte Vertragsstaaten :
**AT DE FR GB IT NL SE**

(56) Entgegenhaltungen :
**DE-A- 2 637 141**
**DE-A- 2 942 027**
**GB-A- 2 018 001**

(73) Patentinhaber : **Philips Patentverwaltung GmbH**
**Billstrasse 80**
**D-2000 Hamburg 28 (DE)**
**DE**
**N.V. Philips' Gloeilampenfabrieken**
**Groenewoudseweg 1**
**NL-5621 BA Eindhoven (NL)**
**FR GB IT NL SE AT**

(72) Erfinder : **Sarges, Heidrun, Dr., rer.nat.**
**Am Rabenbaum 20**
**D-6330 Wetzlar-Naunheim (DE)**
Erfinder : **Kommoss, Klaus**
**Am Rabenbaum 26**
**D-6330 Wetzlar-Naunheim (DE)**
Erfinder : **Schütte, Heinz**
**Formerstrasse 33**
**D-6330 Wetzlar (DE)**

(74) Vertreter : **Kupfermann, Fritz-Joachim et al**
**Philips Patentverwaltung GmbH Billstrasse 80 Postfach 10 51 49**
**D-2000 Hamburg 28 (DE)**

## Beschreibung

Die Erfindung bezieht sich auf eine Vorrichtung zum selbsttätigen Einziehen und Auswerfen einer Magnetbandkassette in das bzw. aus dem Kassettenfach eines Magnetbandkassettengerätes,

— mit einem auf die Kassette einwirkenden Mitnehmerelement,

— mit einem vom Mitnehmerelement mitgenommenen schiebbaren Triebteil, das beim Einschieben einer Kassette eine Rückholfeder spannt,

— mit einem Übertotpunktgetriebe, bestehend aus einem mit dem schiebbaren Triebteil zusammenwirkenden, um einen Drehpunkt drehbaren Kurbeltriebteil, an dem exzentrisch eine Kurbelstange angreift, die an ihrem vom Angriffspunkt am Kurbeltriebteil abliegenden Ende längsverschieblich geführt ist,

— mit einer die Kurbelstange über eine Steuerplatte vorspannenden Übertotpunktfeder, deren Spannkraft größer als die der Rückholfeder ist, und

— mit einer Rastspeicherstellung des über den Übertotpunkt hinaus gedrehten Übertotpunktgetriebes.

Aus der DE-PS 26 37 141 ist eine derartige Vorrichtung bekannt. Beim Einschieben einer Kassette in den Kassettenschacht nimmt die Kassette eine Zahnstange mit. Eine an der Zahnstange angebrachte Rückholfeder wird dadurch gespannt. Die Zahnstange dreht beim Einschieben der Kassette ein Übertotpunktgetriebe, das aus einem mit der Zahnstange kämmenden Kurbelzahlrad und einer an das Zahnrad angreifenden Kurbelstange besteht. Durch das Einschieben der Kassette von Hand wird das Übertotpunktgetriebe über seinen Übertotpunkt hinweg gedreht, und die vorgespannte Kurbelstange dreht nach Überschreiten des Übertotpunktes das Kurbelzahnrad selbsttätig weiter bis zu einer Rastspeicherstellung. Voraussetzung dafür ist, daß die Übertotpunktfeder, die an der Kurbelstange angreift, stärker ist als die Rückholfeder der Zahnstange. Wird die Rastung des Kurbeltriebes in der Speicherstellung aufgehoben, dann schiebt das Übertotpunktgetriebe die Zahnstange unter der Wirkung der Rückholfeder selbsttätig über den Übertotpunkt hinweg bis in die Ausgangsstellung. Bei diesem Aufbau eines selbsttätigen Einzugsmechanismus ist an der Vorderseite des Gerätes nicht genügend Platz für Funktionsteile.

Es ist Aufgabe der Erfindung, eine Vorrichtung der eingangs erwähnten Art zu schaffen, mit der es möglich ist, den selbsttätigen Einzugs- und Auswerfweg zu verlängern bei Verkürzung des manuellen Weges, um damit an der Vorderseite des Gerätes mehr Platz für andere Funktionsteile des Gerätes zu schaffen.

Die gestellte Aufgabe ist erfindungsgemäß dadurch gelöst, daß das drehende Triebteil eine Scheibe mit einer äußeren Triebfläche ist, deren Kurve einer bestimmten Funktion folgt wobei der Abstand Drehpunkt — Triebfläche in Einschiebewirkrichtung ansteigt, und daß das schiebende Triebteil eine angepaßte Triebstange ist mit einer mit der Triebfläche der Scheibe zusammenwirkenden Kontaktfläche, deren Kurve einer entsprechenden Funktion folgt.

Die Trieb- und Kontaktflächen können dabei in beliebiger Form, beispielsweise als Reibflächen ausgebildet sein. Eine bevorzugte Ausführungsform ist derart aufgebaut, daß das drehende Triebteil als eine gezahnte Spirale und das schiebende Triebteil als eine an die gezahnte Spirale angepaßte Zahnstange ausgebildet ist.

Auf diese Weise läßt sich der selbsttätige Hub vergrößern, da sich mit zunehmendem Abstand Mittelpunkt zu Triebfläche der Weg des zugeordneten schiebenden Triebteiles ständig vergrößert. Gleichzeitig wird der manuelle Hub verkleinert. Die als drehendes Triebteil dienende Spirale macht es möglich, sanfte Übergänge zwischen der manuellen und der automatischen Hubbewegung einzuführen.

An sich sind Zahngetriebe aus Radkörpern mit unrunden Wälzlinien zur Realisierung eines bestimmten Bewegungsablaufes bekannt (vergl. Buch «Feinmechanische Bauelemente» von Prof. Dr.-Ing. Siegfried Hildebrand, Karl-Hanser-Verlag, München 1968). Dazu ist es aber aus dieser Literaturstelle auch bekannt, daß Zahngetriebe aus Radkörpern mit unrunden Wälzlinien seltener Anwendung finden, da ihre Herstellung teuer und ungenau ist. Diese bisher als hinderlich angesehenen Ungenauigkeiten führen dazu, daß die mit einer Zahnspirale zusammenwirkende Zahnstange beispielsweise nicht geradlinig ist, sondern einer eigenwillig gekrümmten Linienführung folgt.

Ein solches Übertotpunktgetriebe kann nach folgender Regel aufgebaut sein :

Die Zahnung der Zahnspirale folgt der Funktion $f_1 = r(\alpha)$, wobei $r(\alpha)$ den jeweiligen Abstand vom Spiraldrehpunkt zur Zahnspirale und $\alpha$ den Winkel zwischen der Radialen zur Mitte des ersten Zahnes und der Radialen des gerade betrachteten Punktes auf der Zahnspiralen angibt; $f_1$ ist also in Polarkoordinaten beschrieben. Die Zahnung der Zahnstange folgt der Funktion $f_2(r)$, wobei gilt :

$$f_2(r(\alpha)) = \int_0^\alpha r(\gamma)\, d\gamma.$$

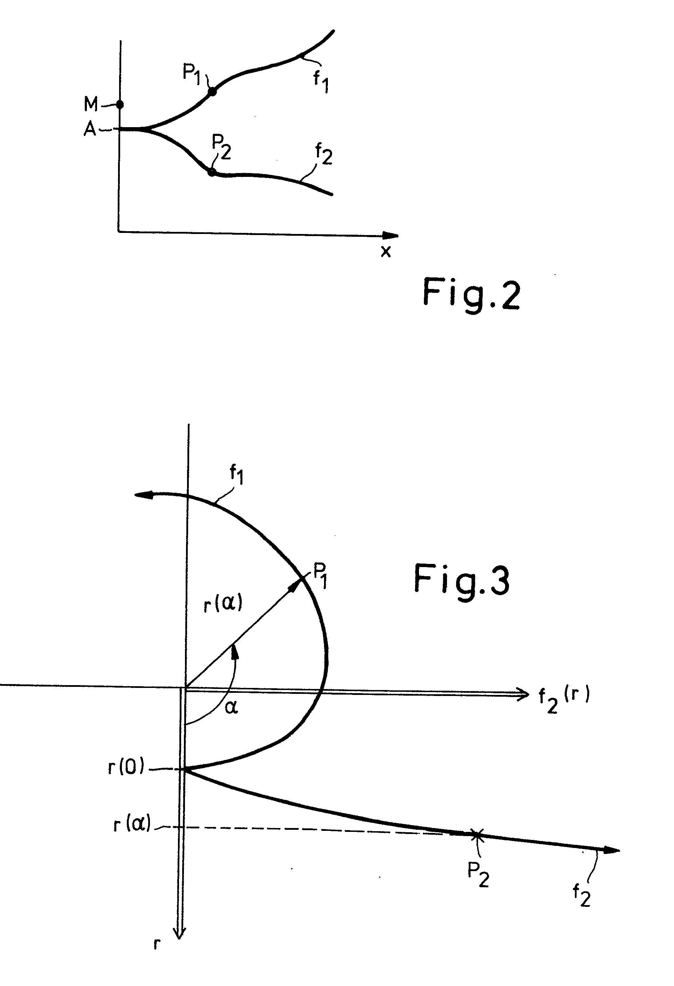

$f_2$ ist dabei in kartesischen Koordinaten beschrieben. In Fig. 3 ist die Wahl der Koordinaten für die Funktionen $f_1$ und $f_2$ dargestellt.

Der Zusammenhang zwischen $f_1$ und $f_2$ ergibt sich aus der Bedingung, daß die Zahnstange ($= f_2$) bei der Drehung des drehenden Triebteiles ($= f_1$) eine geradlinige Bewegung ausführen soll.

Für jede monoton wachsende Funktion $r(\alpha)$ erhält man eindeutig eine zugehörige Funktion $f_2(r)$ ; umgekehrt läßt sich $r(\alpha)$ eindeutig bestimmen, falls $f_2(r)$ gegeben ist.

Der geradlinige Bewegungsablauf der Zahnstange ist dabei im Hinblick auf die technische Verwertbarkeit vorausgesetzt.

Ein solches Getriebe mit monoton wachsendem $r(\alpha)$ hat ein ansteigendes Übersetzungsverhältnis. Die Formgebung von Zahnspirale und Zahnstange ist im allgemeinen relativ verwickelt.

In einer weiteren Ausgestaltung der Erfindung wird eine spezielle Möglichkeit für die Funktionen $f_1$ und $f_2$ angegeben. Dabei wird $f_2$ als Gerade gewählt, und $f_1$ stellt die dazugehörige Spirale dar ; $f_1$ wächst exponentiell mit $\alpha$.

In den Formeln soll bedeuten :

$n + 1$ die Anzahl der Zähne,

$i$ den laufenden Index,

$r_0 = r(0)$ den Abstand der Zahnmitte des ersten Zahnes vom Drehpunkt des drehenden Triebteils,

$r_n = r(\alpha_n)$ den Abstand des letzten Zahnes vom Drehpunkt des drehenden Triebteils,

$\alpha_i$, $i = 1, ..., n$ den Winkel zwischen der Radialen vom Drehpunkt vom ersten zum $(i + 1)$-ten Zahn,

$B$ die gesamte Bogenlänge von $f_1$,

$$\beta = \arcsin \frac{r_n - r_0}{B}$$

$f_1$ und $f_2$ folgen dabei der folgenden Gesetzmäßigkeit :

1. $$r(\alpha) = r_0 \cdot e^{c\alpha} \quad \text{wobei} \quad c = \frac{r_n - r_0}{\sqrt{B^2 - (r_n - r_0)^2}} \quad \text{ist}$$

2. $$\alpha_i = \frac{\sqrt{B^2 - (r_n - r_0)^2}}{r_n - r_0} \cdot \ln\left(1 + \frac{r_n - r_0}{n \cdot r_0} \cdot i\right), \qquad i = 1, ..., n$$

3. $$\alpha_n = \frac{\sqrt{B^2 - (r_n - r_0)^2}}{r_n - r_0} \cdot \ln \frac{r_n}{r_0}$$

Der Bogen $B$ ist durch die Punkte $P_i$, $i = 1, ..., n$, die durch $(\alpha_i/r(\alpha_i))$ beschrieben sind, in $n$ gleichlange Bogenstücke unterteilt. Die Funktion $f_2$ der Zahnstange S ist eine verzahnte Tangente zur Zahnspirale D, die gegenüber der Verschiebungsrichtung x der Zahnstange um den Winkel $\beta$ geneigt ist.

Es sind auch andere Formen für das drehbare Triebteil möglich, z. B. eine exzentrisch gelagerte Kreisscheibe oder eine Ellipse, wobei selbstverständlich nur Teile der Umfangsflächen eingesetzt werden.

Die Erfindung wird anhand des in der Zeichnung dargestellten Ausführungsbeispieles näher erläutert. Es zeigen :

Figur 1 eine Prinzipskizze der bekannten Übertotpunktgetriebebauart mit einem Übersetzungsverhältnis automatischerWeg zu manuellem Weg gleich 1 : 1 (Zahnrad und geradlinige Zahnstange in Bewegungsrichtung)

Figur 2 ein allgemeines Verzahnungsprinzip,

Figur 3 die Wahl der Koordinaten zur Beschreibung von $f_1$ und $f_2$,

Figur 4 ein Ausführungsbeispiel mit einer Zahnspirale mit linear ansteigendem Übersetzungsverhältnis, also $r(\alpha) = a\alpha + b$, wobei das Verhältnis der automatischen Weglänge zur manuellen Weglänge bereits größer als 1 ist,

Figur 5 ein Ausführungsbeispiel mit einer Zahnspirale und einem bei dieser Zahnspirale exponentiell steigenden Übersetzungsverhältnis, also $r(\alpha) = e^{a\alpha + b}$. Das Verhältnis der automatischen Zuglänge zur manuellen Zuglänge ist wieder größer als 1. Die Zahnstange hat eine einfache geradlinige Verzahnung.

Figur 6 eine Einzeldarstellung von Zahnspirale und Zahnstange nach Fig. 5,

Figur 7 eine Prinzipdarstellung eines Übertotpunktgetriebes mit exzentrisch gelagertem drehendem Triebteil,

Figur 8 eine Prinzipdarstellung eines Übertotpunktgetriebes mit elliptischem drehendem Triebteil.

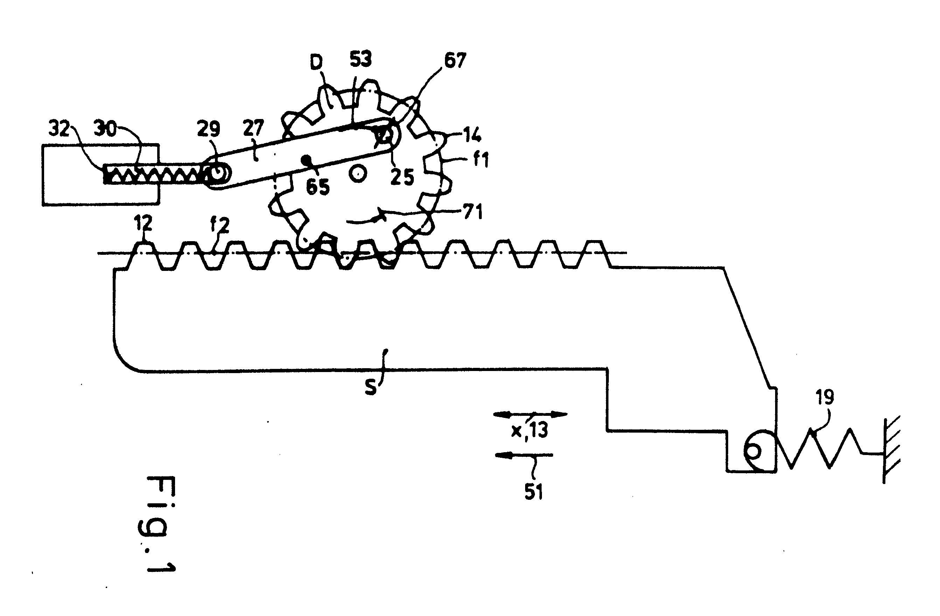

Fig. 1 zeigt schematisch das Wirken eines Übertotpunktgetriebes. Das Übertotpunktgetriebe besteht aus einem schiebenden Triebteil, einer Zahnstange S. Die Zahnstange S ist mit einer strichpunktiert dargestellten Zahnmittenlinie versehen, die einer Funktion $f_2$ folgt. $f_2$ ist in diesem Fall eine Gerade. Die Zahnstange S ist in Richtung eines Doppelpfeiles X, 13 verschieblich, die in Richtung der Geraden nach der Funktion $f_2$ verläuft.

Mit den Zähnen 12 der Zahnstange S kämmen die Zähne 14 eines drehenden Triebteiles, eines Zahnrades D. Die Mittenlinie der Zahnung des Zahnrades D folgt einer Funktion $f_1$. Das Zahnrad D ist an einer Stirnseite mit einem Kurbelzapfen 25 versehen, an dem eine Kurbelstange 27 angreift. Am dem Kurbelzapfen 25 abgelegenen Ende der Kurbelstange 27 befindet sich ein Führungszapfen 29, der in einem Schlitz 30 verschieblich ist. Eine Übertotpunktfeder 32 in dem Schlitz ist bestrebt, die Kurbelstange 27 in der Zeichnung in Richtung auf das Zahnrad D zu drücken. Wenn nun die Zahnstange S entgegen der Wirkung einer Rückholfeder 19 in Richtung des Pfeiles 51 verschoben wird, dann dreht sich das mit der Zahnstange S kämmende Zahnrad D in Richtung eines Pfeiles 53 aus einer entlasteten Endlage 71 zum Übertotpunkt 65. Beim Überschreiten des Übertotpunktes 65 drückt die Übertotpunktfeder 32 die Kurbelstange 27 in Richtung des Pfeiles 53 weiter bis zu einer vorgespannten Endlage bei 25. Die Zahnstange S wird dabei von dem Zahnrad D nach links weiter verschoben, wobei vorausgesetzt ist, daß die Übertotpunktfeder 32 stärker ist als die Rückholfeder 19.

Bei einer derartigen Vorrichtung, die im Prinzip zum automatischen Einziehen und Auswerfen von Bandkassetten geeignet ist, ergibt sich beim Einzug, das ist eine Bewegung in Richtung eines Pfeiles 51, ein Verhältnis von manuell zurückzulegendem Einzugsweg $W_M$ zwischen der entlasteten Endlage 71 und dem Übertotpunkt 65 einerseits und dem automatischen Einzugsweg $W_A$ zwischen dem Übertotpunkt 65 und der vorgespannten Endlage 67 andererseits von 1 : 1. Der automatisch zurückzulegende Einzugsweg mit dem bekannten Übertotpunktgetriebe läßt sich bei dieser Vorrichtung gegenüber dm manuell zurückgelegten Einzugsweg $W_M$ nicht vergrößern.

In Fig. 2 ist eine Prinzipskizze dargestellt, die das Abwälzverhalten zwischen der Zahnstange und dem Zahnrad verdeutlicht. Die Funktion, nach der die Zahnmittenlinie des sich drehenden Teiles (in Fig. 1 das Zahnrad D) ausbildet, ist dabei mit $f_1$ angegeben. Die Funktion, der die Zahnmittenlinie der Zahnstange S folgt, ist mit $f_2$ angegeben. Die Linien der Funktionen $f_1$ und $f_2$ sind auch in die Fig. 1 eingetragen. $P_1$ und $P_2$ in der Darstellung nach Fig. 2 sind Punkte, die in dem in Fig. 2 dargestellten Zeitpunkt auseinanderliegen, die aber beim weiteren Abwälzen des sich drehenden Triebteiles an dem schiebenden Triebteil miteinander in Eingriff kommen. Der Punkt A zeigt den Augenblick, in dem die Zahnmittenlinien der Funktionen $f_1$ und $f_2$ sich berühren. Im weiteren Verlauf der Bewegung kommen $P_1$ und $P_2$ zur Deckung, während die Zahnmittenlinien links davon wieder auseinanderlaufen. Die Funktion $f_2$ ist dabei in kartesichen Koordinaten beschrieben. Fig. 3 zeigt die Wahl der Koordinaten von $f_1$ und $f_2$.

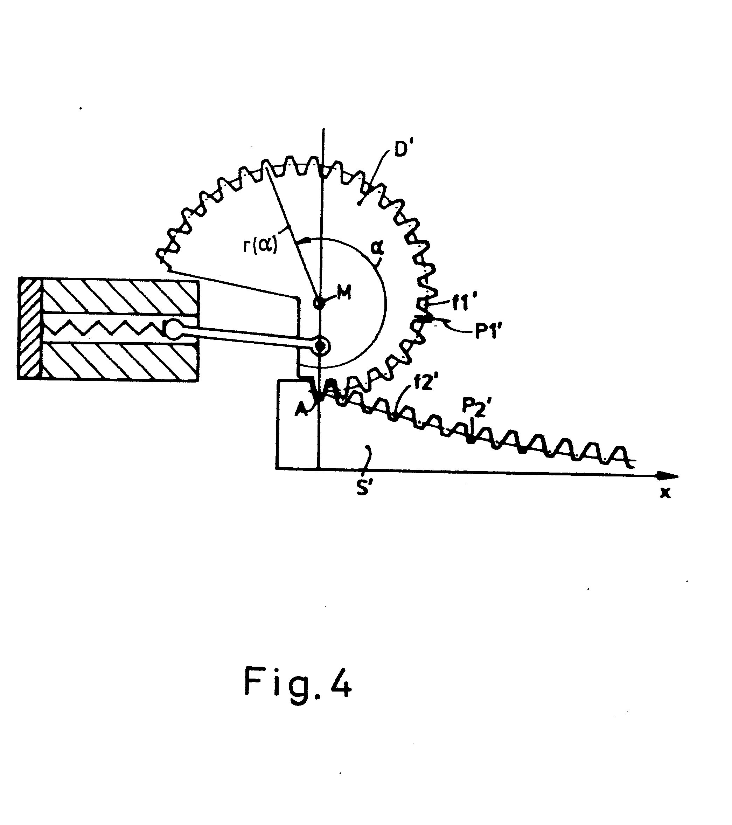

Das Übersetzungsverhältnis zwischen automatischer Weglänge $W_A$ und manueller Weglänge $W_M$ läßt sich über den Wert 1 hinaus vergrößern, wenn $f_1$ nicht mehr der Kreisform, sondern einer Spiralform folgt. Eine derartige Ausbildung ist im Funktionsprinzip in Fig. 4 dargestellt. Die Funktion $f_1'$ folgt dabei der Zahnmittenlinie einer Spirale. Die Funktion $f_1'$ kann angegeben werden mit $f_1' = r(\alpha)$.

Dabei ergibt sich für die mit der Zahnmittenlinie nach der Funktion $f_1'$ zusammenwirkende Mittenlinie der Zahnstangenzahnung die Funktion $f_2'$. Diese ist bestimmt durch die Formel :

$$f_2'(r(\alpha)) = \int_0^\alpha r(\beta)\, d\beta\,.$$

Für $r(\alpha) = a\alpha + b$ ergibt sich daraus

$$f_2'(r) = \frac{r^2}{2\,a} - \frac{b^2}{2\,a} \quad \text{(Fig. 4)}\,.$$

$P_1'$ und $P_2'$ nach Fig. 4 sind dabei wieder Punkte, die beim Drehen des Triebteiles D' um den Mittelpunkt M und beim Bewegen des schiebenden Triebteiles S' während der Funktionsbewegung nach einem bestimmten Bewegungsweg zusammenfallen.

An sich sind auch noch andere Formen von drehendem Triebteil D' und schiebendem Triebteil S' denkbar. Im Prinzip kann jede monoton wachsende Funktion $r(\alpha)$ gewählt werden, insbesondere auch Polynome in $\alpha$. Für $f_2'$ ergeben sich dann zugeordnete mehr oder weniger komplizierte Kurven, die im allgemeinen nicht explizit darstellbar sind.

Generell führen Verzahnungsfunktionen in Spiralform zu einer Verlängerung des automatischen Einzugsweges gegenüber dem manuellen Einzugsweg.

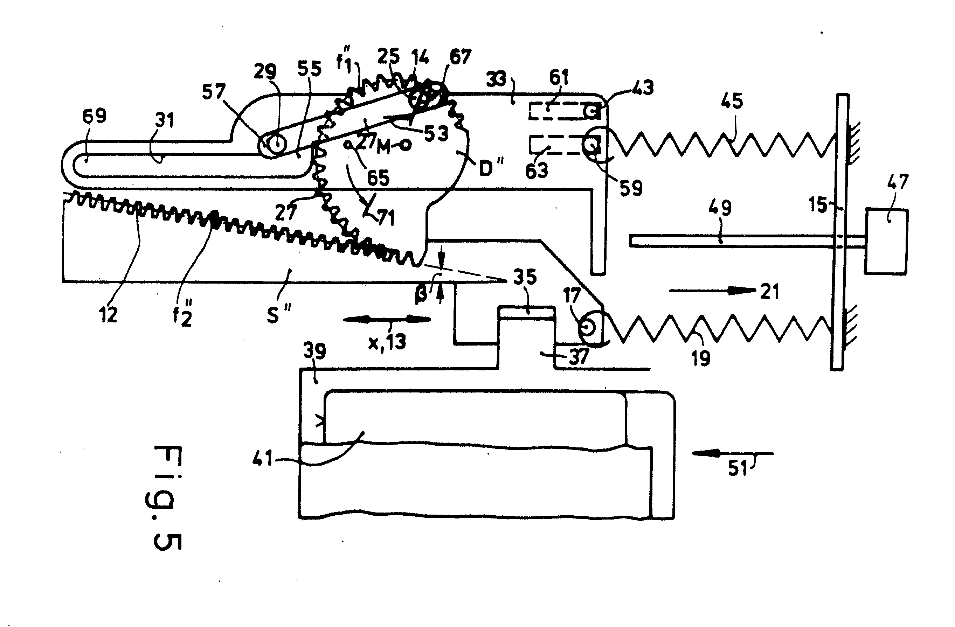

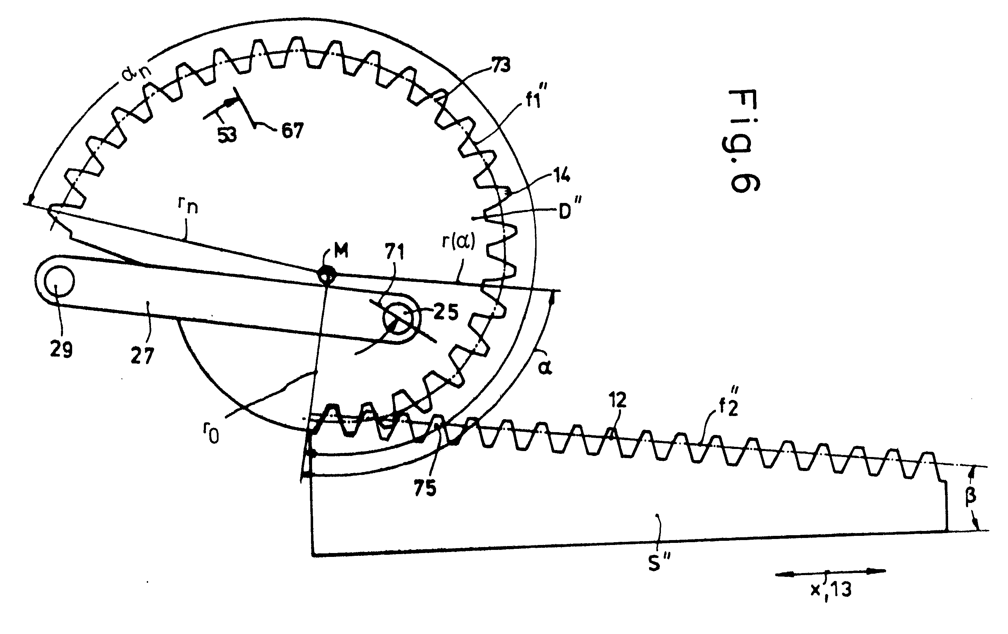

in Fig. 5 und 6 ist eine Ausführungsform der automatishen Einzugsvorrichtung mit Übertotpunktgetriebe dargestellt, bei der sich einfache Zahnformen und damit einfache Zahnmittenlinien der Funktion $f_1''$ für das drehende Triebteil D'' und $f_2''$ für das schiebende Triebteil S'' ergeben. Besonders augenfällig und wichtig ist dabei, daß die Zahnmittenlinie des schiebenden Triebteildes D'', d. h. der Zahnstange, eine Gerade ist. Die Funktionen der Zahnmittenlinien von $f_1''$ und $f_2''$ wurden bereits zuvor im einzelnen erläutert. Das Ergebnis von Verzahnungen mit diesen Zahnmittenlinien $f_1''$ und $f_2''$ ist ein exponentiell steigendes Verhältnis zwischen automatischen Einzugsweg $W_A$ zu manuellem Einzugsweg $W_M$ von 1 an.

Das Übertotpunktgetriebe nach Fig. 5 besteht aus einer Zahnstange S'', die mit einer Zahnmittenlinie nach der Funktion $f_2''$ versehen ist. Diese Zahnmittenlinie verläuft durch die Mitten der Zähne 12 der

4

Zahnstange S". Die Bewegungsrichtung der Zahnstange S" ist durch den Doppelpfeil 13 angegeben. Am Chassis 15 des Gerätes und an einer Halterung 17 der Zahnstange S" greifen die Enden einer Zahnstangenzugfeder 19 an. Die Zahnstangenzugfeder 19 hat das Bestreben, die Zahnstange S" in Richtung eines Pfeiles 21 in der Zeichnung nach rechts zu ziehen.

Die Zähne 12 der Zahnstange S" kämmen mit den Zähnen 14 einer am Chassis gelagerten Zahnspirale D", deren Zahnmittenlinie einer Funktion $f_1$" folgt. An einem Kurbelzapfen 25 an einer Zahnradstirnseite greift eine Kurbelstange 27 an, die am vom Kurbelzapfen 25 abliegenden Ende mit einem Führungszapfen 29 in eine L-förmige Nut 31 einer Steuerplatte 33 eingreift. Zahnstange S" und Zahnrad D" bilden zusammen mit der Kurbelstange 27 und der Steuerplatte 33 das Übertotpunktgetriebe.

Die Zahnstange S" ist mit einer Ausnehmung 35 versehen, in die ein Mitnehmer 37 eines Kassetteneinschubes 39 eingreift.

Die Steuerplatte 33 ist um ein Drehlager 43 schwenkbar, das aus einem an ihr befestigten Stift besteht, der in einem Langloch 61 des Chassis verschieblich gelagert ist. Eine Übertotpunktfeder 45, die am Chassis 15 und einem Federhalter 59 der Steuerplatte 33 angreift, schwenkt die Steuerplatte 33 entgegen dem Uhrzeigersinn gegen die Zahnstange S" und zieht die Steuerplatte 33 gleichzeitig nach rechts. Mit Hilfe einer Taste 47 und einer Tastenstange 49 kann die Steuerplatte 33 im Uhrzeigersinn entgegen der Vorspannung der Übertotpunktfeder 45 zurückverschwenkt werden.

Der automatische Einzug erfolgt folgendermaßen. Eine Bandkassette 41 wird in den Kassetteneinschub 39 eingesetzt und in Richtung eines Pfeiles 51 zusammen mit dem Kassetteneinschub in das Gerät eingedrückt. Dabei nimmt der Mitnehmer 37 die Zahnstange S" mit. Die mit der Zahnstange S" kämmende Zahnspirale D" dreht sich in Richtung eines Pfeiles 53. Der Führungszapfen 29 liegt in dem Fußteil 55 der L-förmigen Nut an einer Kante 57 an. Die Steuerplatte 33 wird beim Drehen der Zahnspirale D" entgegen der Zugkraft der Übertotpunktfeder 45 mitgenommen, wobei das Drehlager 43 und der Federhalter 59, der in ein Langloch 63 eingreift, in den Langlöchern 61 und 63 des Chassis 15 nach rechts gleiten. Beim Überschreiten des Übertotpunktes 65 zieht die Übertotpunktfeder 45 die Steuerplatte 33 in eine vorgespannte Endzwischenlage 67. Der Federhalter 59 und der Stift des Drehlagers 43 liegen an den rechten Enden der Langlöcher 61 und 63 an. Der Einzugsweg zwischen dem Übertotpunkt 65 und der Endzwischenlage 67 erfolgt, da die Übertotpunktfeder 45 kräftiger ist als die Zahnstangenfeder 19, selbsttätig. Aufgrund des angestiegenen Spiraldurchmessers ist der Einzugsweg nach dem Überschreiten des Übertotpunktes 65 größer als davor.

In Fig. 5 ist die Einzugsvorrichtung in der Vorladestellung dargestellt, d. h. nach Vollendung des automatischen Einzugsweges. Soll die Bandkassette 41 nach einem Abspielen wieder ausgeworfen werden, dann wird durch Eindrücken der Taste 47 mit Hilfe der Tastenstange 49 gegen die Steuerplatte 33 gedrückt, die damit im Uhrzeigersinn um das Drehlager 43 verschwenkt. Dadurch löst sich der Führungszapfen 29 der Kurbelstange 27 aus dem Fußteil 55 der L-förmigen Nut 31 und gleitet in deren Langlochteil 69. Die Zahnstangenfeder 19 kann nun das vorgespannte Übertotpunktgetriebe rückwärts drehen in Richtung eines Pfeiles 70, wobei der Auswurfweg zwischen der vorgespannten Endzwischenlage 67 über den Übertotpunkt 65 hinweg bis in die Endlage 71 mit Hilfe der Zugkraft der Zahnstangenfeder 19 automatisch durchfahren wird.

In Fig. 6 sind noch einmal in größerer Darstellung die Zahnspirale D" im Zusammenwirken mit der Zahnstange S" dargestellt. Die Zahnstange S" und die Zahnspirale D" befinden sich, abweichend von der Stellung in Fig. 5, in der Ausgangsstellung zum Einschieben einer Kassette, d. h. der Kurbelzapfen 25 befindet sich in der Endstellung 71. Dabei sind die erste Radiale $r_o$ der Zahnspirale D" mit der kleinsten Länge und die letzte Radiale $r_n$ mit der größten Länge eingetragen. Zwischen $r_o$ und $r_n$ befinden sich alle Radialen r der dazwischenliegenden Zähne 14 mit steigender Länge r. Der Winkel $\alpha$ wird stets von der Radialen $r_o$ aus gemessen. Der Winkel $\alpha$ ist im Zusammenhang mit der Radialen $r(\alpha)$ eingezeichnet, und $\alpha_n$ zeigt den Winkel zwischen $r_o$ und $r_n$. Die durch die Zahnmittelpunkte 73 der Zähne 14 der gezahnten Spirale D" verlaufende, alle Zahnmittelpunkte 73 verbindende Mittenlinie ist mit $f_1$" angegeben. Entsprechend den Zahnmitten der Zähne 14 haben auch die Zähne 12 der Zahnstange S" Mittelpunkte 75. Diese Mittelpunkte sind durch die sie verbindende Gerade $f_2$" verbunden.

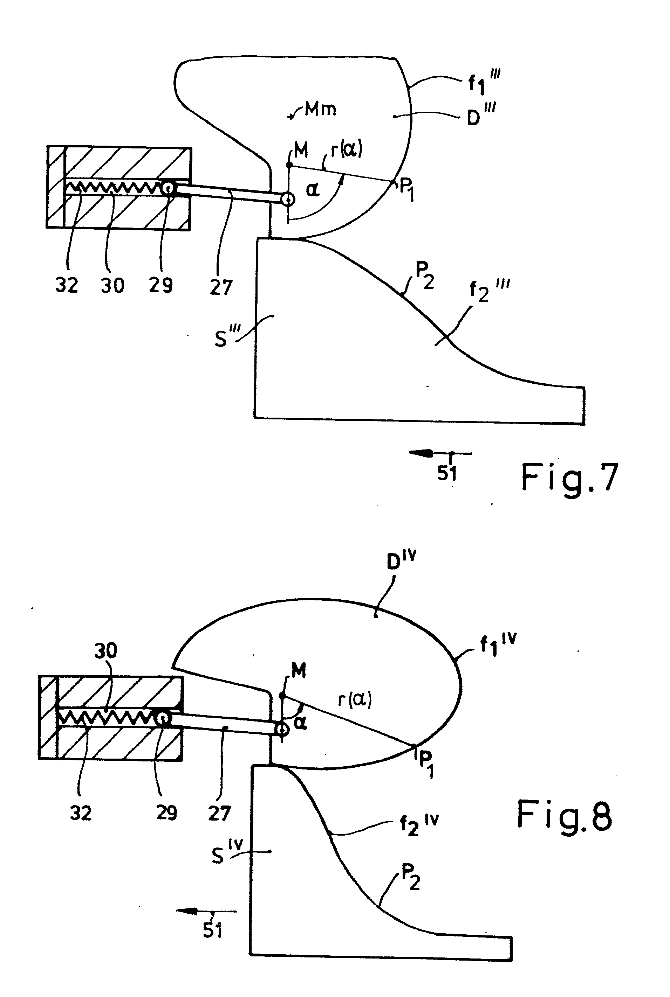

In Fig. 7 ist eine andere Ausführungsform der Erfindung dargestellt. Das drehende Triebteil D''' ist dabei eine Kreisscheibe mit dem Mittelpunkt $M_m$. Die Scheibe D''' ist jedoch um den Punkt M drehbar. Damit nimmt bei wachsendem Winkel $\alpha$ der Abstand $r(\alpha)$ zwischen dem Drehpunkt M und der Triebfläche $f_1$''' zu. Damit ist das Übersetzungsverhältnis zwischen Triebstange S''' und drehendem Triebteil D''' bei einer Einschiebebewegung der Triebstange S''' in Richtung des Pfeiles 51 steigend. Die Kontaktkurve $f_2$''' ist nicht linear.

Bei einem weiteren Ausführungsbeispiel, das in Fig. 8 dargestellt ist, ist das drehende Triebteil $D^{IV}$ eine elliptische Scheibe mit der Triebfläche $f_1^{IV}$. Das drehende Triebteil $D^{IV}$ ist drehbar um den Drehpunkt M gelagert. Wie bei den Ausführungsbeispielen nach Fig. 4 und 7 greift am drehenden Triebteil $D^{IV}$ eine Kurbelstange 27 an, die am vom drehenden Triebteil abliegenden Ende mit einem Führungszapfen 29 versehen ist, der in einem Schlitz 30 verschieblich geführt ist. Eine Übertotpunktfeder 32 in dem Schlitz ist bestrebt, die Kurbelstange 27 in Richtung auf das Triebteil D zu verschieben. Das elliptische Drehteil $D^{IV}$ wirkt, wie bei den anderen Ausführungsbeispielen, mit einer Triebstange $S^{IV}$ zusammen, die mit einer Kontaktfläche $f_2^{IV}$ zusammenwirkt. Bei einem Verschieben der Triebstange $S^{IV}$ in Richtung des Pfeiles 51 wird das drehende elliptische Triebteil $D^{IV}$ mitgenommen. Das Übersetzungsverhältnis ist auch in diesem Fall wieder größer als 1. Die Übertotpunktgetriebe nach den Fig. 7 und 8 arbeiten im übrigen entsprechend den Übertotpunktgetrieben nach den vorhergegangenen Beispielen.

## Patentansprüche

1. Vorrichtung zum selbsttätigen Einziehen und Auswerfen einer Magnetbandkassette in das bzw. aus dem Kassettenfach eines Magnetbandkassettengerätes,
— mit einem auf die Kassette einwirkenden Mitnehmerelement,
— mit einem vom Mitnehmerelement mitgenommenen schiebbaren Triebteil, das beim Einschieben einer Kassette eine Rückholfeder spannt,
— mit einem Übertotpunktgetriebe, bestehend aus einem mit dem schiebbaren Triebteil zusammenwirkenden, um einen Drehpunkt (M) drehbaren Kurbeltriebteil, an dem exzentrisch eine Kurbelstange angreift, die an ihrem vom Angriffspunkt am Kurbeltriebteil abliegenden Ende längsverschieblich geführt ist,
— mit einer die Kurbelstange über eine Steuerplatte vorspannenden Übertotpunktfeder, deren Spannkraft größer als die der Rückholfeder ist, und
— mit einer Rastspeicherstellung des über den Übertotpunkt hinaus gedrehten Übertotpunktgetriebes,
dadurch gekennzeichnet, daß das drehende Triebteil (D) eine Scheibe mit einer äußeren Triebfläche ist, deren Kurve einer bestimmten Funktion (f1', f1''), folgt, wobei der Abstand Drehpunkt (M) — Triebfläche in Einschiebewirkrichtung ansteigt, und daß das schiebende Triebteil (S) eine angepaßte Triebstange ist mit einer mit der Triebfläche der Scheibe zusammenwirkenden Kontaktfläche, deren Kurve einer entsprechenden Funktion (f2', f2'') folgt.

2. Vorrichtung nach Anspruch 1, dadurch gekennzeichnet, daß die Kurve der äußeren Triebfläche des drehenden Triebteils (D) eine gezahnte Spirale und das schiebende Triebteil (S) eine an die gezahnte Spirale angepaßte Zahnstange ist.

3. Vorrichtung nach den Ansprüchen 1 und/oder 2, dadurch gekennzeichnet, daß die Funktion der Kurve der äußeren Triebfläche des drehenden Triebteils (D) ein Polynom in $\alpha$ ist, an das die Funktion der Kurve der Kontaktfläche des schiebenden Triebteils (S) angepaßt ist, wobei $\alpha$ den Winkel zwischen der Radialen vom Drehpunkt (M) zwischen der Mitte des ersten Zahnes und der Radialen zu dem gerade betrachteten Punkt auf der äußeren Triebfläche angibt.

4. Vorrichtung nach einem oder mehreren der Ansprüche 1 bis 3, dadurch gekennzeichnet, daß die Kurve der Spiraltriebfläche der Funktion $f_1' = r(\alpha)$ und die angepaßte Kurve der Triebstangenkontaktfläche der Funktion $f_2'(r(\alpha))$ bestimmt durch

$$f_2'(r(\alpha)) = \int_0^\alpha r(\gamma)\, d\gamma\,,$$

wenigstens näherungsweise folgen.

5. Vorrichtung nach einem der Ansprüche 1 und/oder 2, dadurch gekennzeichnet, daß die Kurve $f_1''$ der Spiraltriebfläche folgender Gesetzmäßigkeit gehorcht :

1. $$r(\alpha) = r_0 \cdot e^{c\alpha} \quad \text{wobei} \quad c = \frac{r_n - r_0}{\sqrt{B^2 - (r_n - r_0)^2}} \quad \text{ist}$$

2. $$\alpha_i = \frac{\sqrt{B^2 - (r_n - r_0)^2}}{r_n - r_0} \cdot \ln\left(1 + \frac{r_n - r_0}{n \cdot r_0} \cdot i\right), \qquad i = 1, ..., n$$

3. $$\alpha_n = \frac{\sqrt{B^2 - (r_n - r_0)^2}}{r_n - r_0} \cdot \ln\frac{r_n}{r_0}$$

wobei
n + 1 die Anzahl der Zähne,
$r_0 = r(o)$ den Abstand der Zahnmitte des ersten Zahnes vom Drehpunkt des drehenden Triebteils,
$r_n = r(\alpha_n)$ den Abstand der Zahnmitte des letzten Zahnes vom Drehpunkt des drehenden Triebteils,
$\alpha_i$ den Winkel zwischen der Radialen vom Drehpunkt von dem ersten zum (i + 1)-ten Zahn,
B die gesamte Bogenlänge von $f_1''$
und die Kurve der Triebstangenkontaktfläche (12) eine Gerade ist, die mit der Verschieberichtung der Triebstange einen Winkel

$$\beta = \text{arc} \sin \frac{r_n - r_0}{B}$$

einschließt.

6. Vorrichtung nach Anspruch 1, dadurch gekennzeichnet, daß das drehende Triebteil eine exzentrisch gelagerte Scheibe ist (Fig. 7).

7. Vorrichtung nach Anspruch 1, dadurch gekennzeichnet, daß die Kurve der äußeren Triebfläche des drehenden Triebteils eine Ellipse ist (Fig. 8).

## Claims

1. A device for the automatic loading and ejection of a magnetic-tape cassette into and out of a cassette holder of a magnetic-tape-cassette apparatus, which device comprises
— a carrying element which co-operates with the cassette,
— a slidable drive member which is moved by the carrying element and which tensions a return spring during insertion of a cassette,
— an over-centre mechanism, comprising a crank drive member which is rotatable about a pivot (M), which co-operates with the slidable drive member and which is eccentrically coupled to a connecting rod, whose end which is remote from the point where said rod is coupled to the crank-drive member is guided longitudinally,
— an over-centre spring which exerts a pre-tension on the connecting rod via a control plate, which tension is greater than that of the return spring,
— the over-centre mechanism having a latched position when it is rotated beyond the over-centre point,
characterized in that the rotary drive member (D) is a disc with an external drive surface whose curve is in conformity with a specific function ($f_1'$, $f_1''$), the distance between the centre of rotation (M) and the drive surface increasing in the direction which said disc has during insertion, and in that the sliding drive member (S) is an adapted drive rod (S) which comprises a contact surface which-co-operates with the drive surface of the disc, which contact surface has a curve in conformity with a corresponding function ($f_2'$, $f_2''$).

2. A device as claimed in Claim 1, characterized in that the rotary drive member (D) is a spiral gear and the sliding drive member (S) is a gear rack which is adapted to co-operate with the spiral gear.

3. A device as claimed in Claim 1 and/or 2, characterized in that the function of the curve of the outer drive surface of the rotary drive member (D) is a polynomial in $\alpha$, to which the function of the curve of the contact surface of the sliding drive member (S) is adapted, where $\alpha$ is the angle between the radius from the centre of rotation (M) between the centre of the first tooth and the radius to the point on the outer drive surface being considered.

4. A device as claimed in one or more of the Claims 1 to 3, characterized in that the curve of the spiral drive surface at least substantially complies with the function $f_1' = r(\alpha)$ and the adapted curve of the drive-rod contact-surface with the function $f_2'(r(\alpha))$, which is defined by

$$f_2'(r(\alpha)) = \int_0^{\alpha} r(\gamma)\,d\gamma\,,$$

5. A device as claimed in Claim 1 and/or 2, characterized in that the curve ($f_1''$) of the spiral drive surface obeys the following laws :

1. $$r(\alpha) = r_0 \cdot e^{c\alpha} \quad \text{where} \quad c = \frac{r_n - r_0}{\sqrt{B^2 - (r_n - r_0)^2}}$$

2. $$\alpha_i = \frac{\sqrt{B^2 - (r_n - r_0)^2}}{r_n - r_0} \cdot \ln\left(1 + \frac{r_n - r_0}{n \cdot r_0} \cdot i\right), \qquad i = 1, ..., n$$

3. $$\alpha_n = \frac{\sqrt{B^2 - (r_n - r_0)^2}}{r_n - r_0} \cdot \ln\frac{r_n}{r_0}$$

where
$n + 1$ is the number of teeth
$r_0 = r(0)$ is the distance of the tooth centre of the first tooth from the centre of rotation of the rotary drive member,

$r_n = r(\alpha_n)$ is the distance of the tooth centre of the last tooth from the centre of rotation of the rotary drive member,

$\alpha_i$ is the angle between the radii from the centre of rotation to first tooth and the $(i + 1)$th tooth,

B is the overall arc length of $f_1''$

and the curve of drive-rod contact surface (12) is a straight line which makes an angle

$$\beta = \text{arc sin} \frac{r_n - r_0}{B}$$

with the direction of movement of the drive rod.

6. A device as claimed in Claim 1, characterized in that the rotary drive member is an eccentrically journalled disc.

7. A device as claimed in Claim 1, characterized in that the rotary drive member is an ellipse and that the sliding drive member is a drive rod adapted to cooperate with the ellipse (Fig. 7).

## Revendications

1. Dispositif pour insérer automatiquement une cassette de bande magnétique dans le compartiment à cassette d'un appareil à cassette de bande magnétique et pour l'éjecter automatiquement hors de celui-ci, comprenant :

— un élément entraîneur agissant sur la cassette,

— un organe d'entraînement coulissant entraîné par l'organe entraîneur qui, lors de l'insertion d'une cassette, bande un ressort de rappel,

— un engrenage de dépassement de point mort, formé d'un organe d'entraînement à manivelle pouvant tourner autour d'un centre de rotation (M), coopérant avec l'organe d'entraînement coulissant et attaqué excentriquement par une biellette dont l'extrémité opposée à l'organe d'entraînement à manivelle est guidée longitudinalement,

— un ressort de dépassement de point mort qui précontraint la biellette par l'intermédiaire d'une plaque de commande, la puissance de ce ressort étant supérieure à celle du ressort de rappel, et

— une position encliquetée de l'engrenage de dépassement de point mort tourné au-delà du point mort,

caractérisé en ce que l'organe d'entraînement tournant (D) est un disque présentant une surface d'entraînement externe dont la courbe suit une fonction déterminée $(f_1', f_1'')$, la distance séparant le centre de rotation (M) de la surface d'entraînement augmentant dans le sens de l'insertion, et que l'organe d'entraînement coulissant (S) est une barre adaptée présentant une surface de contact coopérant avec la surface d'entraînement du disque et dont la courbe suit une fonction correspondante $(f_2', f_2'')$.

2. Dispositif suivant la revendication 1, caractérisé en ce que la courbe de la surface d'entraînement externe de l'organe d'entraînement tournant (D) est une spirale dentée et l'organe d'entraînement coulissant (S) est une crémaillère adaptée à la spirale dentée.

3. Dispositif suivant les revendications 1 et/ou 2, caractérisé en ce que la fonction de la courbe de la surface d'entraînement externe de l'organe d'entraînement tournant (D) est un polynôme en $\alpha$, auquel la fonction de la courbe de la surface de contact de l'organe d'entraînement coulissant (S) est adaptée, étant entendu que $\alpha$ est l'angle formé entre le rayon mesuré entre le centre de rotation (M) et le milieu de la première dent et le rayon mesuré jusqu'au point précisément considéré sur la surface d'entraînement externe.

4. Dispositif suivant l'une quelconque des revendications 1 à 3, caractérisé en ce que la courbe de la surface d'entraînement spiralée suit au moins approximativement la fonction $(f_1' = r(\alpha))$ et la courbe adaptée de la surface de contact de la barre d'entraînement, la fonction $(f_2'(r(\alpha)))$ déterminée par :

$$f_2'(r(\alpha)) = \int_0^\alpha r(\gamma)\, d\gamma ,$$

5. Dispositif suivant l'une et/ou l'autre des revendications 1 et 2, caractérisé en ce que la courbe $(f_1'')$ de la surface d'entraînement spiralée respecte la loi mathématique suivante :

1. $$r(\alpha) = r_0 \cdot e^{c\alpha} \quad \text{où} \quad c = \frac{r_n - r_0}{\sqrt{B^2 - (r_n - r_0)^2}}$$

2. $$\alpha_i = \frac{\sqrt{B^2 - (r_n - r_0)^2}}{r_n - r_0} \cdot \ln\left(1 + \frac{r_n - r_0}{n \cdot r_0} \cdot i\right), \quad i = 1, ..., n$$

# 0 070 062

3.
$$\alpha_n = \frac{\sqrt{B^2 - (r_n - r_0)^2}}{r_n - r_0} \cdot \ln \frac{r_n}{r_0}$$

où

n + 1 le nombre de dents,

$r_0 = r(0)$ la distance séparant le milieu de la première dent du centre de rotation de l'organe d'entraînement tournant,

$r_n = r(\alpha_n)$ la distance séparant le milieu de la dernière dent du centre de rotation de l'organe d'entraînement tournant,

$\alpha_i$ l'angle formé entre les rayons de la première jusqu'à la (i + 1)-ième dent à partir du centre de rotation

B la longueur d'arc totale de $f_1''$

et la courbe de la surface de contact de la barre d'entraînement (12) est une ligne droite qui forme avec la direction de déplacement de la barre d'entraînement un angle :

$$\beta = \arcsin \frac{r_n - r_0}{B}$$

6. Dispositif suivant la revendication 1, caractérisé en ce que l'organe d'entraînement tournant est un disque tourillonnant de manière excentrique (Fig. 7).

7. Dispositif suivant la revendication 1, caractérisé en ce que la courbe de la surface d'entraînement externe de l'organe d'entraînement tournant est une ellipse (Fig. 8).

9

Fig.1

0 070 062

Fig.2

Fig.3

Fig. 4

Fig. 5

0 070 062

Fig.6

Fig.7

Fig.8